(19) Europäisches Patentamt
European Patent Office
Office européen des brevets

(11) **EP 2 573 689 A1**

(12) **EUROPEAN PATENT APPLICATION**
published in accordance with Art. 153(4) EPC

(43) Date of publication:
**27.03.2013   Bulletin 2013/13**

(51) Int Cl.:
***G06F 17/30*** $^{(2006.01)}$

(21) Application number: **11854316.4**

(22) Date of filing: **30.12.2011**

(86) International application number:
**PCT/CN2011/084984**

(87) International publication number:
**WO 2012/089152 (05.07.2012 Gazette 2012/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **31.12.2010   CN 201010619961**

(71) Applicant: **Huawei Technologies Co., Ltd.
Shenzhen, Guangdong 518129 (CN)**

(72) Inventors:
• **WEI, Mingchang
Chengdu
Sichuan 611731 (CN)**
• **ZHANG, Wei
Chengdu
Sichuan 611731 (CN)**

(74) Representative: **Kreuz, Georg Maria
Huawei Technologies
Dessauerstrasse 3
80992 Munich (DE)**

(54) **METHOD AND DEVICE FOR IMPLEMENTING REDUNDANT ARRAY OF INDEPENDENT DISK PROTECTION IN FILE SYSTEM**

(57)    Embodiments of the present invention disclose a method and an apparatus for implementing protection of redundant array of independent disks in a file system, and are applied in the field of communications technologies. In the embodiments of the present invention, after receiving a file operation request, the file system needs to determine the type of a file to be operated as requested by the file operation request, and perform file operations in a hard disk drive of the file system directly according to a file operation method corresponding to the determined file type, that is, a redundant array of independent disks RAID data protection method. Therefore, corresponding file operations may be performed in a proper operation method according to each different file types, and data of an important file type is primarily protected, thereby improving reliability of data storage.

Receive a file operation request, and determine the type of a file to be operated as requested by the file operation request — 101

Select a corresponding file operation method, that is, RAID data protection method, according to the determined file type — 102

Perform file operations in a hard disk according to the selected file operation method — 103

FIG. 1

EP 2 573 689 A1

## Description

This application claims priority to Chinese Patent Application No. 201010619961.2, filed with the Chinese Patent Office on December 31, 2010 and entitled "METHOD AND APPARATUS FOR IMPLEMENTING PROTECTION OF REDUNDANT ARRAY OF INDEPENDENT DISKS IN FILE SYSTEM", which is hereby incorporated by reference in its entirety.

## FIELD OF THE INVENTION

The present invention relates to the field of communications technologies, and in particular, to a method and an apparatus for implementing protection of redundant array of independent disks in a file system.

## BACKGROUND OF THE INVENTION

A file system is a file management system for managing and storing file information. The file system is capable of reading and writing data from and into a redundant array of independent disks (Redundant Array of Independent Disks, RAID) module by using a virtual block device of a logic unit (LUN). The RAID module may include one or more data storage blocks (marked as RAIDn). Each data storage block includes multiple hard disk drives. The data is stored in the hard disk drives, and carries additional redundant information.

At the time of reading and writing data, upon receiving a data read/write request, that is, an input/output (I/O) request, the file system resolves the data read/write request, and then stores the request into a corresponding location in the LUN virtual block device; the RAID module reads the data read/write request in the LUN virtual block device, resolves the data read/write request, and then processes the requested data by using a RAID data protection method, for example, stores the data into the hard disk drive, or reads the data from the hard disk drive. The RAID data protection method is the method used when the RAID module reads or writes data, and comes in many types, that is, a data protection method of RAIDn (n = 1,2...).

In the prior art, when processing file data, the RAID module reads/writes data in the hard disk drive randomly, and therefore, the reliability of data storage is low.

## SUMMARY OF THE INVENTION

Embodiments of the present invention provide a method and an apparatus for implementing protection of redundant array of independent disks in a file system, thereby improving reliability of data storage and simplifying the file processing process.

An embodiment of the present invention provides a method for implementing protection of redundant array of independent disks in a file system, including:

receiving a file operation request, and determining the type of a file to be operated as requested by the file operation request, where the type of the file includes file metadata and/or file data;
selecting a corresponding file operation method according to the determined file type, where the file operation method is a redundant array of independent disks RAID data protection method; and
performing file operations in a hard disk drive according to the selected file operation method.

An embodiment of the present invention provides an apparatus for implementing protection of redundant array of independent disks in a file system. The apparatus includes a type determining module and an operating module.

The type determining module is configured to receive a file operation request, and determine the type of a file to be operated as requested by the file operation request, where the type of the file includes file metadata and/or file data.

The operating module is configured to: select a corresponding file operation method according to the file type determined by the type determining module, where the file operation method is a redundant array of independent disks RAID data protection method; and perform file operations in a hard disk drive according to the selected file operation method.

In this embodiment, after receiving the file operation request, the file system needs to determine the type of the file to be operated as requested by the file operation request, and perform file operations in the hard disk drive of the file system directly according to the file operation method corresponding to the determined file type, that is, a redundant array of independent disks RAID data protection method. Therefore, file operations may be performed in a proper operation method according to each different file type, and data of an important file type is primarily protected. For example, important data may be written into each hard disk drive of the file system, thereby improving reliability of data storage.

Moreover, the method provided in the embodiments of the present invention avoids the following operations: The file system and the RAID module resolve the file operation request respectively, and then the RAID module performs file operations in the hard disk drive. Instead, the file system uses a RAID data protection method to access the system hard disk drive directly, thereby simplifying the file processing process and improving the system reliability.

## BRIEF DESCRIPTION OF THE DRAWINGS

To illustrate the technical solutions in the embodiments of the present invention or in the prior art more clearly, the following briefly describes the accompanying drawings required for describing the embodiments or the prior art. Apparently, the accompanying drawings in the following description merely show some embodiments of the present invention, and persons of ordinary skill in the art may derive other drawings from these drawings without creative efforts.

FIG. 1 is a flowchart of a method for implementing protection of redundant array of independent disks in a file system according to an embodiment of the present invention;

FIG. 2 is a schematic structural diagram of data storage according to an embodiment of the present invention;

FIG. 3 is a schematic structural diagram of an apparatus for implementing protection of redundant array of independent disks in a file system according to an embodiment of the present invention;

FIG. 4 is a schematic structural diagram of relationships between a file system and an upper-layer application system according to an embodiment of the present invention; and

FIG. 5 is a schematic structural diagram of another apparatus for implementing protection of redundant array of independent disks in a file system according to an embodiment of the present invention.

**DETAILED DESCRIPTION OF THE EMBODIMENTS**

The following clearly and completely describes the technical solutions according to the embodiments of the present invention with reference to the accompanying drawings in the embodiments of the present invention. Apparently, the embodiments in the following description are merely a part rather than all of the embodiments of the present invention. All other embodiments obtained by persons of ordinary skill in the art based on the embodiments of the present invention without creative efforts shall fall within the protection scope of the present invention.

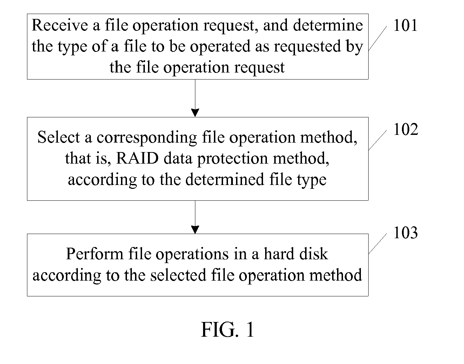

An embodiment of the present invention provides a method for implementing protection of redundant array of independent disks in a file system. The file operation method in the embodiment of the present invention is a method performed by the file system. As shown in FIG. 1, the method includes:

101. Receive a file operation request, and determine the type of a file to be operated as requested by the file operation request, where the type of the file includes file metadata and/or file data.

Here, the file operation request may be a file read/write request, for example, an I/O request. The file metadata refers to attribute data in the file system, such as file format and file size; and the file data refers to content data of the file.

102. Select a corresponding file operation method according to the determined file type.

The file operation method refers to a method used for performing file operations, and may be any type of traditional protection method for RAID data, and different methods may be applied to different file types. For example, for data of an important file type, a multi-mirroring redundant algorithm of RAID1 may be selected; for data of certain types, the protection method such as RAID1, RAID5, or RAID6 may be selected as required by the application scenario.

RAIDn (n = 0, 1, 10, 5, 50, 6, 60) identifies the type of a data protection method. Each data protection method varies in type. For example, RAID1 is a multi-mirroring redundancy protection method for data, RAID5 stores data into data strips, any data fragment in each data strip may be calculated by using a check block and other data fragments in the data strip. The data fragments in a data strip are stored in different hard disk drives.

Here, the file system uses, according to the obtained file type, a different RAID data protection method to access one or more hard disk drives directly, and performs file operations, thereby improving reliability of data storage.

103. Perform file operations on hard disk drives of the file system according to the file operation method selected in step 102.

In this embodiment, the data in the file system is stored in multiple hard disk drives. Such hard disk drives will not constitute a redundant array of an independent disk. The file system may perform file operations on these hard disk drives directly, for example, write data or read data into or from the hard disk drive directly. The hard disk drive here may be any non-volatile storage medium, such as a traditional hard disk drive, a solid-state hard disk drive, a magnetic tape, or a compact disc erasable.

For example, if the file operation method is a multi-mirroring redundancy protection method of RAID1, when writing a file, the file system needs to back up the file in multiplies copies, and store them in multiple hard disk drives respectively; if the file operation method is a RAID5 data protection method, when writing a file, the file system stores the file into the data strips of the hard disk drive according to the RAID5 data protection method.

In this embodiment, after receiving the file operation request, the file system needs to determine the type of the file to be operated as requested by the file operation request, and perform file operations in the hard disk drives of the file system directly according to the file operation method corresponding to the determined file type, that is, a RAID data protection method. Therefore, corresponding file operations may be performed by using a proper operation method according to each different file type, and data of an important file type is primarily protected. For example, important data may be written into each hard disk drive of the file system, thereby improving reliability of data storage.

Moreover, the method provided in the embodiments of the present invention avoids the following operations: The file system and the RAID module resolve the file operation request respectively, and then the RAID module performs file operations on hard disk drives. Instead, the file system uses a RAID data protection method to access the hard disk drives of the system directly, thereby simplifying the file processing process and improving the system reliability.

In a specific embodiment, if the file operation request received in step 101 is a file write request, and the determined file type includes file metadata, the file operation method selected in step 102 is a multi-mirroring redundant algorithm, and when performing file operations in the hard disk drive in step 103, the following method may be applied: backing up the file metadata into multiple copies and storing them in at least two hard disk drives according to the multi-mirroring redundant algorithm.

The multi-mirroring redundant algorithm is an algorithm of backing up metadata into multiple copies. Understandably, because file metadata is important and is the data that enables basic running of the file system, the file metadata needs to be written into multiple copies and respectively stored into multiple hard disk drives.

If the determined file type includes file data, the file operation performed on hard disk drives in step 103 may be implemented by using the following steps:

A1. Determine a data strip location of the file data in the file system according to an offset location of the file data in the file write request.

A data strip is a unit of storing data in the data protection method of certain RAID types. Each file write request includes the offset location of the file data relative to the initially stored data; according to the offset location, the file system may determine the data strip on which the file data is to be stored, determine the location of the file data in the data strip, and further determine the hard disk drive on which the file data is to be stored.

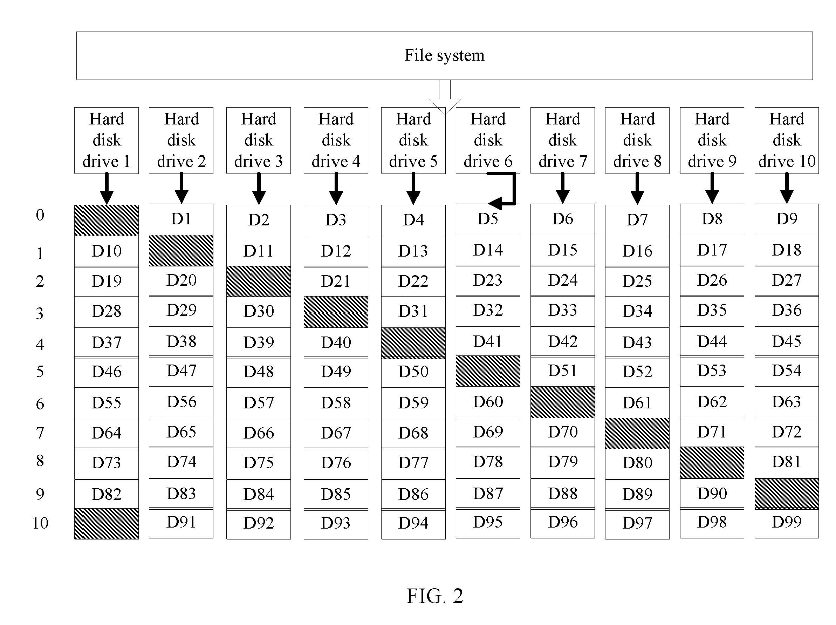

Supposing that the file data is stored according to a RAID5 data protection method, as shown in FIG. 2, the data is stored into 10 hard disk drives, and each hard disk drive has multiple data fragments. FIG. 2 illustrates only 11 data fragments on the hard disk drive, and the area filled with oblique lines in FIG. 2 stores a check block P. Each data strip includes 9 horizontally distributed data fragments and one check block P. The check block P may be obtained by using formula (1) below:

$$P = D1 \text{ xor } D2 \text{ xor } D3 \ldots \text{ xor } Dn \ (1)$$

In the formula above, D1, D2, D3...Dn represent the data fragments in a data strip, P is a check block, and xor represents an Exclusive-OR operation.

Supposing that the offset location of the file data in the file write request is 11, and the location of the initially stored data is data fragment D1 in a hard disk drive 2, the file data is to be stored in the D12 location on data strip 1, and therefore it is determined that the file data is to be stored in a hard disk drive 4.

A2. Write the file data into a corresponding hard disk drive according to the determined location.

It is understandable that each hard disk drive has a single-disk file system for managing the fragment files in a single disk. At least two fragment files are created on the single-disk file system. When performing the write operation for a file in step 103, the file metadata and/or the file data may be distributed into these fragment files. In this way, the files corresponding to a file operation request can be distributed into the fragment files of a single-disk file system on at least two hard disk drives to form a RAID data protection relationship.

In another specific embodiment, if the file operation request received in step 101 is a file read request, and the determined file type includes file metadata, when performing file operations on hard disk drives in step 103, the following method may be applied: reading the file metadata from any hard disk drive that stores the file metadata.

When performing the write operation for the file metadata, the file metadata is backed up into multiple copies and stored onto at least two hard disk drives according to a multi-mirroring redundant algorithm. Therefore, the file metadata in the at least two hard disk drives makes up a RAID data protection method, and at the time of reading the file metadata, the file metadata may be read from any one of the at least two hard disk drives.

If the determined file type includes file data, the file operation performed on hard disk drives in step 103 may be implemented by using the following steps:

B1. Determine the data strip location of the file data in the file system according to the offset location of the file data in the file read request.

Similarly, each file read request includes the offset location of the file data relative to the initially stored data; according to the offset location, the file system may determine the data strip on which the file data is to be stored, determine the location of the file data in the data strip, and further determine a hard disk drive on which the file data is to be stored.

B2. Read file data from the corresponding hard disk drive in the file system.

If reading the file data fails, lost file data may be calculated according to other data fragments and the check block in the data strip that includes the file data.

Supposing that the file data is stored according to a RAID5 data protection method, as shown in FIG. 2, if the offset location of the file data in the file read request is 13 and the location of the initially stored data is data fragment D1 in the hard disk drive 2, the file data is to be stored in the D14 location on data strip 1, and therefore it is thus determined that the file data is to read from a hard disk drive 6. If reading the file data in D14 fails, the lost file data may be calculated by using formula (1) according to the check block and other data on strip 1, that is, D10-D13 and D15-D18.

In other specific embodiments, the method in this embodiment further includes: detecting a state of the data strip in the file system, and reconstructing lost data when the data of a data strip is lost. The method of reconstructing the lost data is the same as the existing method for the RAID module to reconstruct data in the prior art, and is not repeated here any further.

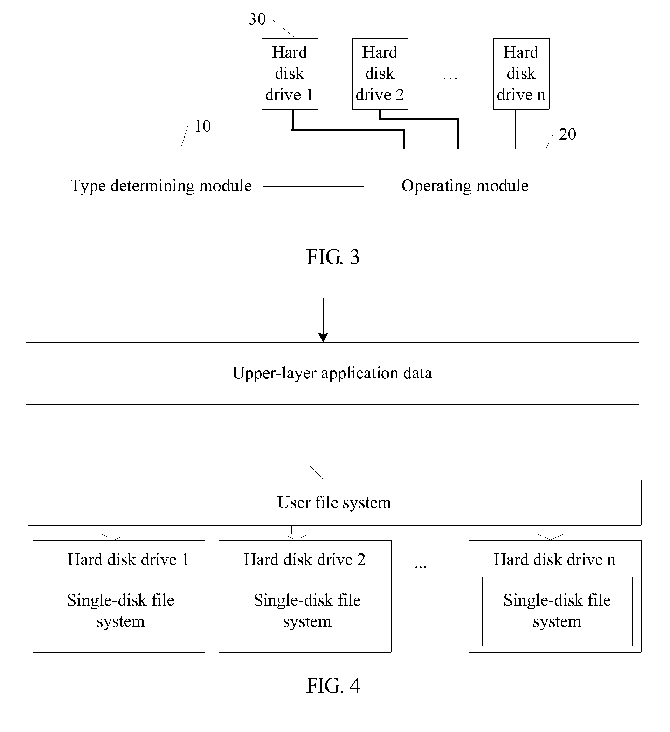

An embodiment of the present invention provides an apparatus for implementing protection of redundant array of independent disks in a file system. The schematic structural diagram of the apparatus is shown in FIG. 3. As shown in FIG. 3, the apparatus includes a type determining module 10 and an operating module 20

The type determining module 10 is configured to receive a file operation request, and determine the type of a file to be operated as requested by the file operation request, where the type of the file includes file metadata and/or file data.

The operating module 20 is configured to: select a corresponding file operation method according to the file type determined by the type determining module 10, where the file operation method is a redundant array of independent disks data protection method; and perform corresponding file operations on hard disk drives according to the selected file operation method.

As shown in FIG. 4, the apparatus in this embodiment may be an apparatus for operating files while a device executes an application program. The apparatus may include a user file system, and may perform data operations on hard disk drives. Each hard disk drive includes a single-disk file system. An upper-layer application system is a user-oriented interface. After receiving a file operation request, the upper-layer application system sends the request to the user file system, and the user file system accesses the hard disk drive directly according to the RAID data protection method, and therefore, the files are distributed in fragment files in a single-disk file system on multiple hard disk drives to form a RAID protection relationship.

In the apparatus for implementing protection of redundant array of independent disks in a file system in this embodiment, after receiving the file operation request, the type determining module 10 needs to determine the type of the file to be operated as requested by the file operation request, and the operating module 20 performs file operations in a hard disk drive 30 directly according to the file operation method corresponding to the determined file type, that is, a RAID data protection method. Therefore, when the file system performs file operations, corresponding file operations may be performed by using a proper operation method according to each different file type, and data of an important file type can be primarily protected. For example, important data may be written into each hard disk drive 30, thereby improving reliability of data storage.

Moreover, the method provided in the embodiments of the present invention avoids the following operations: The file system and the RAID module resolve the file operation request respectively, and then the RAID module performs file operations in the hard disk drive. Instead, the file system uses a RAID data protection method to access the system hard disk drive directly, thereby simplifying the file processing process and improving the system reliability.

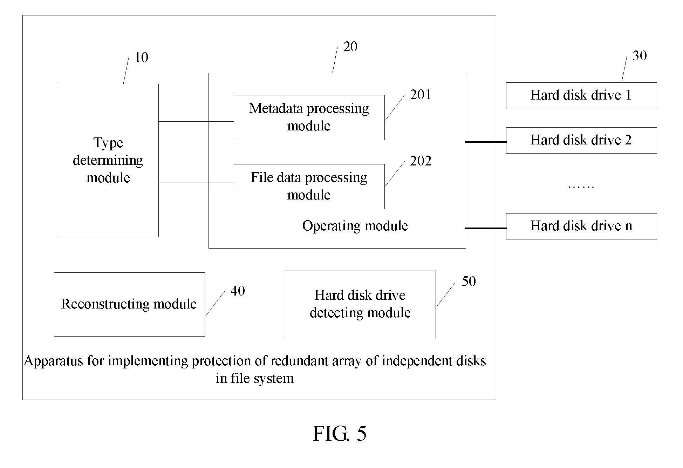

As shown in FIG. 5, in a specific embodiment, the apparatus for implementing protection of redundant array of independent disks in a file system may also include a hard disk drive detecting module 50 and a reconstructing module 40, and the operating module 20 may include a metadata processing module 201 and a file data processing module 202.

The metadata processing module 201 is configured to: if the file operation request is a file read/write request and the type determining module 10 determines that the file type includes file metadata, back up the file metadata into multiple copies and store the file metadata into at least two hard disk drives 30 according to a multi-mirroring redundant algorithm; or if the file operation request is a file read request, read file metadata from any hard disk drive 30 that stores the file metadata.

The file data processing module 202 is configured to: if the file operation request is a file read/write request and the type determining module 10 determines that the file type includes file data, select a RAID algorithm as a file operation method, where the selected RAID algorithm is used to calculate the lost fragment data by using the check block in the data strip; determine a data strip location of the file data in the file system according to an offset location of the file data in the file read/write request; and read/write file data in the corresponding hard disk drive 30 in the file system.

Further, the file data processing module 202 can be further configured to: when any file data is lost, calculate the lost file data according to other data fragments and the check block in the data strip that includes the file data.

The reconstructing module 40 is configured to detect a state of the data strip in the file system, and reconstruct lost data when the data of the data strip is lost.

The hard disk drive detecting module 50 is configured to detect the state of one or more hard disk drives 30 in the file system, and report the state of the hard disk drive to the reconstructing module 40 when the hard disk drive is faulty or a new hard disk drive is inserted.

Understandably, if the file operation request received by the type determining module 10 of the file system in this embodiment is a file read/write request, and the determined file type includes file metadata, the metadata processing module 201 performs corresponding operations for the metadata; if the determined file type includes file data, the file data processing module 202 performs corresponding operations for the file data. Moreover, the reconstructing module 40 detects the state of the data strip in the hard disk drive 30 in the file system, where the data strip stores data; when detecting that a data strip loses data, the reconstructing module reconstructs the lost data; the hard disk drive detecting module 50 detects the state of the hard disk drive 30 and reports the state of the hard disk drive to the reconstructing module 40, and the reconstructing module 40 reconstructs and/or copies back the files according to the state of the hard disk drive. For example, when a hard disk drive is faulty, the reconstructing module reconstructs the data on the faulty hard disk drive; when the hard disk drive recovers from the fault, the reconstructing module copies the data on the hot backup disk back to the recovered hard disk drive.

Persons of ordinary skill in the art should understand that all or part of the steps of the method in the embodiments of the present invention may be implemented by a program instructing relevant hardware. The program may be stored in computer readable storage media. The storage media may be a read-only memory (ROM), a random access memory (RAM), a magnetic disk, or an optical disk.

Detailed above are a method and an apparatus for implementing protection of redundant array of independent disks in a file system according to the embodiments of the present invention. In this specification, specific examples are used for illustrating principles and implementation manners of the present invention. The foregoing descriptions of the embodiments are merely used to help understand the methods and core ideas of the present invention. Meanwhile, persons of ordinary skill in the art may make modifications to the specific implementation manners and application scopes according to the idea of the present invention. In conclusion, the content of the specification shall not be construed as a limitation to the present invention. It is apparent that those skilled in the art may make modifications and variations to the invention without departing from the spirit and scope of the invention. The invention is intended to cover the modifications and variations provided that they fall in the scope of protection defined by the following claims or their equivalents.

**Claims**

1. A method for implementing protection of redundant array of independent disks in a file system, comprising:

   receiving a file operation request, and determining the type of a file to be operated as requested by the file operation request, wherein the type of the file comprises file metadata and/or file data;
   selecting a corresponding file operation method according to the determined file type, wherein the file operation method is a redundant array of independent disks RAID data protection method; and
   performing file operations on one or more hard disk drives according to the selected file operation method.

2. The method according to claim 1, wherein:

   if the file operation request is a file write request, the selecting the corresponding file operation method according to the determined file type comprises:

      if the determined file type comprises file metadata, the selected file operation method is a multi-mirroring redundant algorithm, and the file operations performed in the hard disk drive comprise: backing up the file metadata into multiple copies, and storing them into at least two hard disk drives respectively; and
      if the determined file type comprises file data, the selected file operation method is a RAID algorithm capable of calculating lost fragment data by using a check block in a data strip, and the file operations performed in the hard disk drive comprises: determining a data strip location of the file data in the file system according to an offset location of the file data in the file write request; and write the file data into a corresponding hard disk drive according to the determined location.

3. The method according to claim 2, wherein:

   the file operation request is a file read request, and if the determined file type comprises file metadata, the file operations performed in the hard disk drive comprise: reading the file metadata from any hard disk drive that stores the file metadata;
   if the determined file type comprises file data, the file operations performed in the hard disk drive comprise: determining the data strip location of the file data in the file system according to the offset location of the file data in the file read request; and reading the file data from a corresponding hard disk drive.

4. The method according to claim 2 or 3, wherein:

   a single-disk file system is set on each hard disk drive, at least two fragment files are created on the single-disk file system, and files corresponding to the file operation request are distributed into fragment files of a single-disk file system on at least two hard disk drives to form a RAID data protection relationship.

5. The method according to claim 2 or 3, further comprising:

   when the file data is lost, calculating the lost file data according to other data fragments and a check block in the data strip that stores the file data.

6. The method according to claim 2 or 3, further comprising:

detecting a state of the data strip in the file system, and reconstructing lost data when data of the data strip is lost.

7. An apparatus for implementing protection of redundant array of independent disks in a file system, comprising a type determining module and an operating module;

the type determining module is configured to receive a file operation request, and determine the type of a file to be operated as requested by the file operation request, wherein the type of the file comprises file metadata and/or file data;

the operating module is configured to: select a corresponding file operation method according to the file type determined by the type determining module, wherein the file operation method is a redundant array of independent disks RAID data protection method; and perform file operations in a hard disk drive according to the selected file operation method.

8. The apparatus according to claim 7, wherein the operating module comprises:

a metadata processing module, configured to: if the file operation request is a file read/write request and the type determining module determines that the file type comprises file metadata, back up the file metadata into multiple copies and store the file metadata into at least two hard disk drives according to a multi-mirroring redundant algorithm; or if the file operation request is a file read request, read file metadata from any hard disk drive that stores the file metadata.

9. The apparatus according to claim 8, wherein the operating module further comprises:

a file data processing module, configured to: if the file operation request is a file read/write request and the type determining module determines that the file type comprises file data, select a RAID algorithm as a file operation method, wherein the selected RAID algorithm is used to calculate lost fragment data by using a check block in the data strip; determine a data strip location of the file data in the file system according to an offset location of the file data in the file read/write request; and read/write file data from or into the corresponding hard disk drive in the file system.

10. The apparatus according to claim 9, wherein:

the file data processing module is further configured to calculate lost file data according to other data fragments and a check block in the data strip that stores the file data when the file data is lost.

11. The apparatus according to any one of claims 8-10, further comprising:

a reconstructing module, configured to detect a state of the data strip in the file system, and reconstruct lost data when data of the data strip is lost.

Receive a file operation request, and determine the type of a file to be operated as requested by the file operation request — 101

Select a corresponding file operation method, that is, RAID data protection method, according to the determined file type — 102

Perform file operations in a hard disk according to the selected file operation method — 103

FIG. 1

FIG. 2

30

| Hard disk drive 1 | Hard disk drive 2 | ... | Hard disk drive n |

| Type determining module | Operating module |

FIG. 3

Upper-layer application data

User file system

| Hard disk drive 1 | Hard disk drive 2 | ... | Hard disk drive n |
| Single-disk file system | Single-disk file system | | Single-disk file system |

FIG. 4

FIG. 5

# INTERNATIONAL SEARCH REPORT

International application No.

**PCT/CN2011/084984**

### A. CLASSIFICATION OF SUBJECT MATTER

G06F 17/30 (2006.01) i

According to International Patent Classification (IPC) or to both national classification and IPC

### B. FIELDS SEARCHED

Minimum documentation searched (classification system followed by classification symbols)

IPC: G06F 17/30, G06F 3/-, G11B

Documentation searched other than minimum documentation to the extent that such documents are included in the fields searched

Electronic data base consulted during the international search (name of data base and, where practicable, search terms used)

CPRSABS, VEN, CNKI, WPI: RAID Array, safety, property, metadata, format, different, operate, read, write, independent, RAID, disk, array, file, data, protect, type, select, choos+, chose+, stor+, backup, mirror, strip

### C. DOCUMENTS CONSIDERED TO BE RELEVANT

| Category* | Citation of document, with indication, where appropriate, of the relevant passages | Relevant to claim No. |
|---|---|---|
| A | CN 101567211 A (H3C TECHNOLOGIES CO., LIMITED), 28 October 2009 (28.10.2009), the whole document | 1-11 |
| A | CN 101727298 A (BEIJING ORIENT VIEW TECHNOLOGY CO., LTD.), 09 June 2010 (09.06.2010), the whole document | 1-11 |
| A | US 7454566 B1 (NVIDIA CORP.), 18 November 2008 (18.11.2008), the whole document | 1-11 |
| PX | CN 102024059 A (HUAWEI SYMANTEC TECHNOLOGIES CO., LTD.), 20 April 2011 (20.04.2011), claims 1-11, and description, paragraphs [0035]-[0043] | 1-11 |

☐ Further documents are listed in the continuation of Box C.      ☒ See patent family annex.

| | |
|---|---|
| *    Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| 21 March 2012 (21.03.2012) | **29 March 2012 (29.03.2012)** |

| Name and mailing address of the ISA/CN: | Authorized officer |
|---|---|
| State Intellectual Property Office of the P. R. China<br>No. 6, Xitucheng Road, Jimenqiao<br>Haidian District, Beijing 100088, China<br>Facsimile No.: (86-10) 62019451 | **WANG, Ning**<br><br>Telephone No.: (86-10) **62411681** |

Form PCT/ISA/210 (second sheet) (July 2009)

## INTERNATIONAL SEARCH REPORT
### Information on patent family members

International application No.

**PCT/CN2011/084984**

| Patent Documents referred in the Report | Publication Date | Patent Family | Publication Date |
|---|---|---|---|
| CN 101567211 A | 28.10.2009 | US 2010306466 A1 | 02.12.2010 |
| CN 101727298 A | 09.06.2010 | None | |
| US 7454566 B1 | 18.11.2008 | None | |
| CN 102024059 A | 20.04.2011 | None | |

Form PCT/ISA/210 (patent family annex) (July 2009)

**EP 2 573 689 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201010619961